(19) Europäisches Patentamt
European Patent Office
Office européen des brevets

(11) Publication number: **0 430 054 A1**

# (12) EUROPEAN PATENT APPLICATION

(21) Application number: **90122237.2**

(51) Int. Cl.[5]: **B32B 27/04**, C08J 5/06

(22) Date of filing: **21.11.90**

(30) Priority: **24.11.89 JP 303196/89**
**19.09.90 JP 247291/90**
**27.09.90 JP 255090/90**
**19.10.90 JP 279372/90**

(43) Date of publication of application:
**05.06.91 Bulletin 91/23**

(84) Designated Contracting States:
**DE FR GB IT Bulletin**

(71) Applicant: **TEIJIN LIMITED**
**6-7, Minamihonmachi 1-chome Chuo-ku**
**Osaka-shi Osaka 541(JP)**

(72) Inventor: **Nakayama, Kazuyuki**
**1-5-23, Minohara, Ibaraki-shi**
**Osaka(JP)**

(74) Representative: **Hoeger, Stellrecht & Partner**
**Uhlandstrasse 14 c**
**W-7000 Stuttgart 1(DE)**

## (54) Highly adhesive synthetic fiber material.

(57) A highly adhesive synthetic fiber material able to be firmly bonded to resinous materials, for example, polyurethane or polyvinyl halide resin materials, comprises a substrate comprising at least one synthetic fiber, for example, in the form of a multifilament yarn or fabric; and a coating layer formed on the fiber and comprising 10% to 100% by weight of a polyallylamine compound having recurring units of the formula:

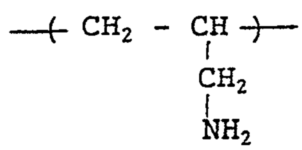

and 0 to 90% by weight of at least one epoxy compound, for example, an aliphatic polyepoxy compound.

EP 0 430 054 A1

# HIGHLY ADHESIVE SYNTHETIC FIBER MATERIAL

## BACKGROUND OF THE INVENTION

### 1. Field of the Invention

The present invention relates to a highly adhesive synthetic fiber material. More particularly, the present invention relates to a highly adhesive synthetic fiber material having an enhanced bonding property to widely-used resinous materials, for example, polyurethane resin materials, halogen-containing polyvinyl resin materials and ethylene-vinyl acetate copolymer resin materials, and useful as an industrial material for reinforcing such resinous materials.

### 2. Description of the Related Arts

It is well known that various types of synthetic fiber materials are utilized in various industrial fields; for example, synthetic aromatic polyamide fibers are noted as high technology materials. Further, synthetic polyester fibers are cheap and have a high mechanical strength, and thus are widely used as reinforcing materials for various industrial materials, for example, polyurethane resin materials, halogen-containing polyvinyl resin materials or ethylene-vinyl acetate copolymer resin materials, for the production of sheet materials such as canvas, tent sheeting, tarpaulin sheeting, aging sheets, artificial leathers, leather laminated composite sheeting, conveyer belts, and hoses. For example, the composite material comprising a polyurethane resin material reinforced by the synthetic fiber material has a high abrasion resistance, and thus is useful for conveyer belts. Another composite material comprising a polyvinyl halide resin material reinforced by the synthetic fiber material has a high chemical resistance and a high electric insulating property, and thus is usable for the purposes for which the above-mentioned properties are required. Still another composite material comprising an ethylene-vinyl acetate copolymer resin material reinforced by the synthetic fiber material is useful for, for example, harmless food containers.

Although the synthetic fiber materials are useful as a reinforcing material or other material to be incorporated into a resinous material, due to the above-mentioned superior properties thereof, most of these synthetic fiber materials have an inactive surface, and thus exhibit an unsatisfactory bonding property to the resinous materials. Accordingly, there is an urgent demand for an enhancement of the surface activity of the synthetic fiber materials.

The following attempts have been made to firmly bond the synthetic fiber material to the resinous material:

(1) A resinous material is coated on two surfaces of a thin sheeting and a bridging between the resultant two resinous material layers is obtained through gaps formed among the yarns in the sheeting.

(2) A synthetic fiber material (fabric) is made of synthetic fiber spun yarns and raised to make it bulky, and a resinous material is coated on the raised surface of the synthetic fiber material (fabric) so that the raised fibers on the synthetic fiber material (fabric) surface create an anchor effect in the coated resinous material layer.

(3) The surface of the synthetic fiber material is physically treated by a cold plasma treatment or a corona discharge treatment, to thereby activate the synthetic fiber material surface.

(4) The synthetic fiber material is coated with a resinous material containing at least one isocyanate compound, which effectively enhances the bonding property of the resinous material to the synthetic fiber material.

(5) The synthetic fiber material is pre-treated with a polyethylene imine, and then coated with the resinous material.

The above-mentioned attempts, however, were not entirely successful, and had the following disadvantages.

Where the synthetic fiber substrate has a high structural density, or no or less fluffs on the surface thereof, the above-mentioned bridging effect or anchor effect is not obtained.

When the synthetic fiber substrate is composed a synthetic multifilament fabric, even if the fabric has a low structural density, a resinous coating layer formed on the fabric has a poor peeling strength and therefore, when the coated fabric is repeatedly bent, the resinous coating layer is separated from the synthetic multifilament fabric substrate.

When a tarpaulin sheet in which two surfaces of a sheeting having a low structural density are coated with resinous coating layers which are bridged through the gaps formed among the yarns, is used over a

long period, it quickly becomes fatigued due to the whips and snaps or stretching and shrinkage repeatedly applied thereto, and thus the resinous coating layer is peeled from the substrate, the yarns are removed from the tarpaulin sheet, or the tarpaulin sheet is broken.

When a synthetic fiber substrate is pre-coated with at least one isocyanate compound before being coated with a polyurethane resin or polyvinyl halide resin, or coated with a mixture of polyisocyanate with the above-mentioned resin, to enhance the bonding strength of the resinous coating layer to the substrate, the resultant coated material sometimes has an undesirable high stiffness and a poor tear strength. If the amount of at least one isocyanate compound to be used is reduced to eliminate the above-mentioned disadvantages, the bonding strength of the resinous coating layer to the synthetic fiber substrate is remarkably lowered. To eliminate this problem, Japanese Examined Patent Publication Nos. 55-36,398 and 53-37,473 and Japanese Unexamined Patent Publication Nos. 59-94,640 and 49-4,775 disclose a treatment of a synthetic fiber substrate with a solution of a polyalkyleneimine before coating same with a resinous material. Nevertheless, the use of the polyalkyleneimine is disadvantageous in that the treated synthetic fiber substrate is undesirably colored yellow or yellowish brown, and therefore, the polyalkyleneimine can be used only for final products in which a coloring of the substrate by the alkyleneimine is not important.

## SUMMARY OF THE INVENTION

An object of the present invention is to provide an adhesive synthetic fiber material capable of being firmly bonded to resinous materials without lowering a tear strength of the resultant final product.

Another object of the present invention is to provide an adhesive synthetic fiber material capable of being firmly bonded to resinous materials even when an adhesive property-enhancing material consisting of a polyisocyanate compound is used in a reduced amount.

Still another object of the present invention is to provide an adhesive synthetic fiber material which is substantially not discolored with a lapse of time, has an improved surface property, and is useful as a substrate or a reinforcing material for resinous materials.

The above-mentioned objects can be attained by the highly adhesive synthetic fiber material of the present invention having a high bonding property to resinous materials, which comprises (A) a substrate comprising at least one synthetic fiber, and (B) a coating layer formed on the synthetic fiber in the substrate and comprising (a) 10% to 100% by weight of at least one polyallylamine compound having recurring units of the formula (I):

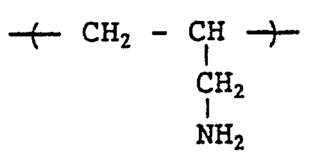

(I)

and (b) 0 to 90% by weight of at least one epoxy compound.

## DESCRIPTION OF THE PREFERRED EMBODIMENTS

The highly adhesive synthetic fiber material of the present invention comprises a substrate composed of at least one synthetic fiber and a coating layer formed on the synthetic fiber in the substrate.

The synthetic fiber usable for the present invention is not limited to a specific type of fiber, as long as it can be used for forming a substrate for resinous material. For example, the synthetic fiber usable for the present invention is selected from the group consisting of polyester fibers, polyamide fibers, aramid fibers, carbon fibers. Further, the synthetic fiber can be in the form of a continuous multifilament, monofilament or a short fiber.

The substrate comprises at least one synthetic fiber and is in the form of individual short fibers, a individual monofilament, a multifilament yarn, a nonwoven fabric composed of a number of short fibers or multifilaments, a woven or knitted fabric composed of a number of short fiber-spun yarns, multifilaments yarns, and monofilament yarns.

The highly adhesive synthetic fiber material of the present invention can be used as a substrate or reinforcing material for various synthetic resinous materials, for example, polyurethane resin materials, halogen-containing polyvinyl resin materials, and ethylene-vinyl acetate copolymer resin materials.

The coating layer formed on the synthetic fiber comprises 10% to 100% by weight of at least one polyallylamine compound having recurring units of the formula (I):

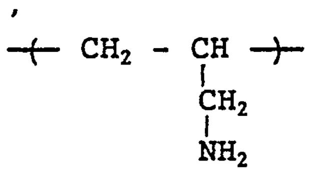

(I)

and 0 to 90% by weight of at least one epoxy compound.

Preferably, the polyallylamine compound has a number average molecular weight of 2,000 to 100,000, more preferably 2,500 to 50,000, and a number average polymerzation degree of 44 to 877. This polyallyamine compound can be prepared by the method disclosed in Japanese Unexamined Patent Publication No. 58-201,811. For example, an inorganic acid salt of a monoallylamine compound is polymerized in a polar organic solvent in the presence of a radical initiator having an azo radical and a cationic nitrogen atom-containing radical in the molecule thereof. The resultant polymer of the monoallylamine compound-inorganic salt is converted to the corresponding polyallylamine compound by removing the inorganic acid by using a strong basic ion-exchange resin or by neutralizing it with an alkali (for example, sodium hydroxide) and dialyzing the resultant neutralization product.

The polymerization of the allylamine compound is carried out by a radical polymerization method, and therefore, when the degree of polymerization is in a low level of less than 2,000, the resultant polymer is sometimes chemically unstable. Also, if the degree of polymerization is at a high level of more than 100,000, the resultant polymer provides a satisfactory improvement of the adhesive property of the resultant synthetic fiber material to the resinous materials, but is unsatisfactory in that the resultant polymer has a very high viscosity and is difficult to handle.

The synthetic fiber substrate and/or the coating layer optionally contain a conventional lubricant, surfactant, anti-static agent, plasticizer, ultraviolet ray absorber, antioxidant and/or stabilizer, unless any of the above will affect the bonding property of the resultant synthetic fiber material.

The epoxy compound to be mixed with the pollyallylamine compound is in an amount of 0 to 90% by weight, and can be selected from adhesive epoxy compounds, for example, aliphatic epoxy compounds.

Usually, the coating layer on the substrate is in an amount of 0.1 to 5.00%, preferably 0.4% to 1.5%, based on the weight of the substrate.

When the amount of the coating layer is less than 0.01% by weight, the resultant synthetic fiber material sometimes exhibits an unsatisfactory bonding property to the resinous materials.

Also, if the amount of the coating layer of more than 5% by weight no further increase in the bonding activity of the resultant synthetic fiber material can be expected, and thus this results in economical disadvantages due to an increased cost thereof.

In an example of the coating layer usable for the present invention, the polyallylamine compound is a copolymer having recurring units selected from those of the formulae (II) and (III):

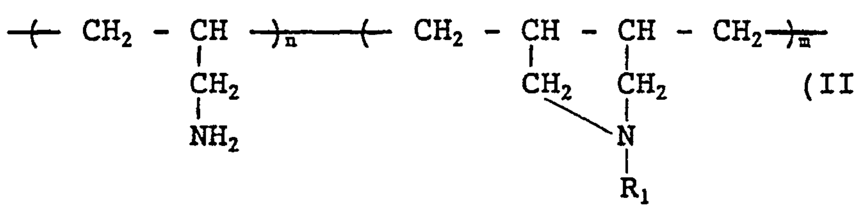

(II)

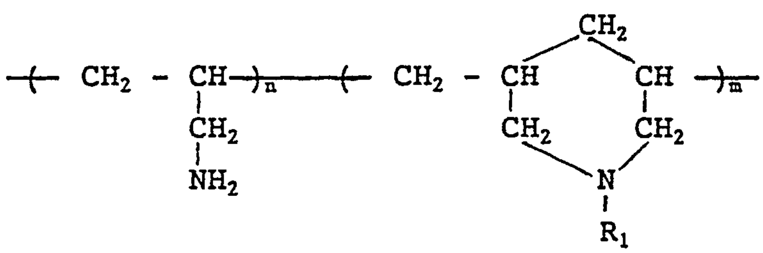

(III)

in which formulae (II) and (III), $R_1$ represents a member selected from the group consisting of a hydrogen atom, alkyl radicals having 1 to 18 carbon atoms, a benzyl radical, and radicals of the formulae $-CH_2-CH_2-OH$ and

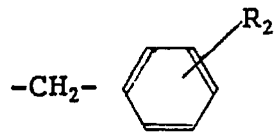

in which $R_2$ represents an alkyl radical with 1 to 18 carbon atoms, n and m represent, respectively and independently from each other, an integer of 1 or more, and a ratio n/m is in a range of from 95/5 to 5/95.

The above-mentioned allylamine copolymer is a copolymerization product of mono allylamine with a diallylamine derivative. That is, the allylamine copolymer can be prepared in accordance with the process disclosed in Japanese Examined Patent Publication No. 63-31595. For example, a monoallylamine salt and a salt of a diallylamine derivative of the formula:

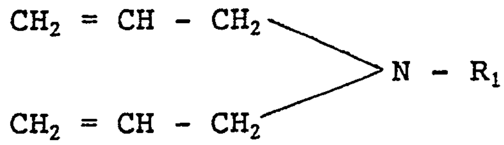

wherein $R_1$ is as defined above, are copolymerized in water or a polar organic solvent in the presence of a polymerization initiator.

The diallylamine derivative usable for the present invention is preferably selected from the group consisting of diallylamine, methyldiallylamine, ethyldiallylamine, propyldiallylamine, butyldiallylamine, butyldiallylamine, amyldiallylamine, octyldiallylamine, lauryldiallylamine, benzyldiallylamine, and hydroxyethyldiallylamine.

The initiator usually comprises at least one member selected from benzoyl peroxide, tert-butylhydroperoxide, azo-bis-isobutylonitrile, azo-bis-(2-amino-dipropane)-hydrocloric acid salt and other azo compounds having an azo radical and a radical having a cationic nitrogen atom.

The resultant salt of the allylamine copolymer can be converted to the corresponding allylamine copolymer by the above-mentioned method.

This allylamine copolymer preferably has a number average molecular weight of 2,000 to 50,000.

In a preferable embodiment of the synthetic fiber material of the present invention, the coating layer comprises (a) 10 to 95% by weight of at least one polyallylamine compound as defined above, and (b) 5 to 90% by weight of at least one aliphatic polyepoxy compound having at least two epoxy radicals per molecule thereof.

The polyallylamine compound is preferably selected from the mono-allylamine homopolymer and the monoallylamine - diallylamine derivative copolymers mentioned above.

Preferably, the aliphatic polyepoxy compound has a molecular weight of 200 to 3,000, and is selected from aliphatic polyglycidyl ether compounds in the state of a liquid at room temperature and soluble or dispensable in water. For example, the aliphatic polyglycidyl ether compounds are selected from aliphatic polyglycidyl ethers of ethylene glycol, glycerol, pentaerythritol, solbitol, polyethylene glycol, glycerol dimmer, and polyglycerols.

The aliphatic polyglycidyl ether compound is opitionally mixed with 50% by weight or less of an additional epoxy compound, for example, heterocyclic triglycidyl isocyanulate, an aromatic compound having one or more glycidyl ether radicals attached to an aromatic ring through an aliphatic chain, or glycidyl ether radical - containing bis-phenol A compounds.

In the coating layer, when the weight ratio of the polyallylamine compound (a) to the aliphatic polyepoxy compound (b) is in the range of 10:90 to 100:0, the resultant synthetic fiber material of the present invention exhibits a satisfactory bonding to the resinous materials.

The synthetic fiber material of the present invention can be produced by treating the substrate with a treating liquid containing the polyallylamine compound, and optionally, the epoxy compound, solidifying the treating liquid on the substrate so as to coat the synthetic fiber surface with the resultant coating layer, and optionally, heat-treating the resultant coating layer.

The treatment can be applied to the synthetic fibers or filaments.

For example, an undrawn synthetic filament is treated with an oiling agent to enhance the drawing property of the filament, the oiled filament is drawn and heat-treated, and then the treating liquid is applied to the drawn filament. Alternatively, the treating liquid is applied to the undrawn filament and the treated undrawn filament is then drawn and heat-treated.

In another example, the treating liquid is applied to a synthetic fiber yarn in a spinning step or twisting step for the yarn.

The treating liquid is prepared by dissolving, dispersing or emulsifying the polyallylamine compound, and optionally the epoxy compound, in water or an organic solvent consisting of methyl alcohol, ethyl alcohol, another lower aliphatic alcohol or formamide. The treating liquid optionally contains an additive comprising at least one member selected from lubricants, for example, mineral oils and esters thereof, non-ionic surface-active agents, for example, polyethylene oxide-added higher alcohol esters, polyethylene oxide-polypropylene oxide copolymers, and ionic surface active agents, as long as the additive does not affect the bonding property of the resultant product.

When the coating layer comprises both the polyallylamine compound and the epoxy compound, it may be formed by coating the synthetic fiber in the substrate with the epoxy compound and then with the polyallylamine compound.

The order of the application of the epoxy compound and the polyallylamine compound can be chosen in consideration of the type of synthetic fiber, the surface conditions of the synthetic fibers, and the chemical surface structure of the coating layer.

Preferably, the coating layer comprises an undercoat layer comprising the epoxy compound, more preferably the aliphatic polyepoxy compound, and formed on the synthetic fiber surface, and an uppercoat layer comprising the polyallylamine compound and formed on the undercoat layer.

In still another example, the coating layer is formed by applying a mixture of the epoxy compound and the polyallylamide compound to the synthetic fiber in the substrate, and then drying and heat-treating the coated mixture layer. In this example, since the polyallylamine is cured at room temperature, the mixture should be consumed as soon as possible after the preparation of the mixture.

When the substrate is in the form of a multifilament yarn, the application of the treating liquid must not cause the individual filaments in the yarn to be adhered to each other, and the treated filament yarn must have a satisfactory lubricating property in the twisting and weaving or knitting steps. Accordingly, the treating liquid preferably contains the above-mentioned lubricant or non-ionic or ionic surface active agent.

In an embodiment of the highly adhesive synthetic fiber material of the present invention, the coating layer is formed on a substrate comprising at least one synthetic filament by coating a precursory substrate consisting of at least one undrawn synthetic filament with an aliphatic polyepoxy compound as defined above, drawing and heat-setting the coated undrawn filament substrate, further coating the drawn filament substrate with the polyallylamine compound, and heat-treating the further coated filament substrate.

The coating of the undrawn filament substrate with the aliphatic polyepoxy compound effectively produces a firm bonding of the aliphatic polyepoxy compound with the undrawn filament surface. A portion of the coated aliphatic polyepoxy compoound can be diffused into the surface portion of the filament during the drawing step and heat-setting step, in which heat energy is applied thereto.

When the polyallylamine compound is applied to the aliphatic polyepoxy compound layer on the filament, and heat-treated, the aliphatic polyepoxy compound is ring opening-polymerized with the polyallylamine compound to form a strong coating polymer layer having an IPN (Interpenetration net work) structure in which the amino radicals are located at a high density on the surface portion of the coating layer. Usually amine compounds are colored yellow or yellowish brown with a lapse of time, and this yellowing of the amine compounds is considered to be unavoidable. Nevertheless, the above-mentioned coating layer has a high resistance to this yellowing.

The application of the polyallylamine compound to the drawn and heat-set filament substrate is not limited to a specific method. For example, immediately after a fillament yarn is coated with the aliphatic polyepoxy compound and the coated filament yarn is drawn and heat-set, the polyallylamine compound is continuously applied to the coated, drawn, and heat set filament yarn. In another example, after the drawn and heat-set filament yarn is twisted, or converted to a woven or knitted fabric, the polyallylamine compound is applied to the twisted yarn or the woven or knitted yarn.

After the drawing step, the drawn filament may be heat-treated under a relaxed condition, to reduce the heat shrinkage and to enhance the dimensional stability of the drawn filament. The polyallylamine compound can be applied to the drawn filament before or after the relaxation treatment.

In an example of the application of the aliphatic polyepoxy compound, the aliphatic polyepoxy compound is mixed with an oiling agent for a spinning process.

This mixture preferably contains (1) the aliphatic polyepoxy compound; (2) an emulsifying or dispersing agent for the aliphatic polyepoxy compound, for example, an alkylsulfonate type, alkylsulfate type, or alkylphosphate type anionic surface active agent or polyalkyleneoxide-addition product of the above-mentioned compounds, which is effective for evenly imparting the aliphatic polyepoxy compound to the filament surface; and (3) a lubricant agent effective for enhancing the lubricity and bundling property of the

filament substrate, for example, mineral oils, higher fatty acid esters, polyethylene oxide-added higher fatty alcohol ethers, polyethyleneoxide-polypropylene oxide copolymers, another non-ionic surface active agents or ionic surface active agents.

The polyallylamine compound can be applied to the drawn filament together with a non-ionic surface active agent, for example, a polyethyleneoxide-added higher fatty alcohol ether, or without using an additive.

In the above-mentioned process, the heat-setting procedure for the aliphatic polyepoxy compound-applied filament is preferably carried out at a temperature of 180°C to 240°C.

Also, the heat-treating procedures for the polyallylamine compound-coated filament is preferably carried out at a temperature of 105°C to 160°C.

The synthetic fiber material of the present invention has a superior bonding property to various resinous materials, specially polyurethane, halogen-containing polyvinyl polymer and ethylene-vinyl acetate copolymer resinous materials due to the specific coating layer formed on the synthetic fiber substrate and comprising the specific polyallylamine compound, and optionally, the epoxy compound.

The present invention will be further explained by the following examples.

Examples 1 and 2 Comparative Examples 1 and 2

In each of Examples 1 and 2 and Comparative Examples 1 and 2, the following procedures were carried out.

The synthetic fiber substrate consisted of a scoured, non-oiled plain weave having a basis weight of 250 $g/m^2$ and composed of polyethylene terephthalate multifilament yarns having a yarn count of 1,000 denier/192 filaments.

The fiber substrate was coated with an aqueous solution containing 7% by weight of the polyallylamine or polyethyleneimine compound as indicated in Table 1 and dried at a temperature of 120°C for 3 minutes. The dry weight of the polyallylamine compound on the fiber substrate is also indicated in Table 1.

The resultant polyallylamine compound-coated fabric was laminated with a polyvinyl chloride resin film in the following manner.

A soft polyvinyl chloride resin was prepared in the following composition.

| Component | Parts by weight |
|---|---|
| Polyvinyl chloride resin (*)1 | 100 |
| Barium stearate (*)2 | 2 |
| Diisooctyl phthalate (*)3 | 55 |

Note: (*)1 --- This resin had a number average molecular weight of 1,100.
(*)2 --- Stabilizer
(*)3 --- Plasticizer

The polyvinyl chloride resin was melt-extruded by a usual calendaring method and the resultant thin film of the polyvinyl chloride resin laminated on a surface of the polyallylamine compound-coated fabric.

The resultant laminate sheet was subjected to the peeling strength test in accordance with JIS 6329-1968, paragraph 6-3-7, at an angle of 180 degrees.

The bonding strength index of the laminate sheet was calculated in accordance with the following equation:

$$\text{Bonding strength index} = \frac{A}{B} \times 10$$

wherein A represents a peeling strength of the laminate and B represents a peeling strength of the laminate of Comparative Example 2 in which the fiber substrate was directly laminated with the polyvinyl chloride resin film without a coating with the polyallylamine compound.

The test results are shown in Table 1.

Table 1

| Item / Example No. | | Coating Compound: Type | Number average molecular weight (MW) | Amount (% by wt) | Resistance to yellowing of fiber substrate | Bonding Strength Index |
|---|---|---|---|---|---|---|
| Example | 1 | Polyally-lamine(*)4 | 41,000 | 0.95 | Good | 18 |
| | 2 | Polyally-lamine(*)5 | 5,670 | 1.08 | Good | 20 |
| Comparative | 1 | Polyethyl-eneimine (*)6 | 1,200 | 0.97 | Bad | 17 |
| Example | 2 | None | - | - | Good | 10(*)7 |

Note: (*)4 --- Trademark: PAA-10, Nitto Boseki K.K.
(*)5 --- Trademark: PAA-3, Nitto Boseki K.K.
(*)6 --- Trademark: Epomine SP 012, Nihon Shokubai Kogaku Kogyo K.K.
(*)7 --- The peeling strength was from 0.9 to 1.0 kg/25.4 mm.

Table 1 shows that, in Examples 1 and 2 accordance with the present invention, the polyallylamine compound-coated polyester fiber fabric exhibited a high resistance to yellowing and provided a very strong bonding to the 30 polyvinyl chloride resin material.

Examples 3 and 4 and Comparative Example 3

In each of examples 3 and 4 and Comparative Example 3, the same procedures as in Example 1 were carried out, with the following exceptions.

35 The synthetic fiber substrate consisted of a scoured, non-oiled plain weave fabric having a basis weight of 280 g/m$^2$ and composed of poly (p-phenylene terephthalamide) multifilament yarns having a yarn count of 1,500 denier/1,000 filaments.

The fiber substrate was coated with an aqueous solution of 7.5% by weight of the polyallylamine compound as indicated in Table 2, and dried at a temperature of 120°C for 3 minutes.

The test results are shown in Table 2.

Table 2

| Item / Example No. | Coating compound | | | Bonding strength index |
|---|---|---|---|---|
| | Type | Number average molecular weight(MW) | Amount (% by wt) | |
| Example 3 | PAA-10 | 41,000 | 1.32 | 23 |
| 4 | PAA-3 | 5,670 | 1.25 | 21 |
| Comparative Example 3 | None | None | None | 10(*)8 |

Note: (*)8 --- The peeling strength was 1.2 kg/25.4 mm.

As clearly shown in Table 2, the laminates of Examples 3 and 4 exhibited a bonding strength of twice or more that of Comparative Example 3.

Examples 5 and 6 and Comparative Example 4

In each of Examples 5 and 6 and Comparative Example 4, the following procedures were carried out.

In a melt-spinning procedure for a polyethylene terephthalate multifilament yarn having a yarn count of 1,000 denier/192 filaments, an oiling liquid containing an aliphatic ester type lubricant was applied in the amount as shown in Table 3 to the undrawn filament yarn; the oiled filament yarn was drawn and heat-set; the individual filaments in the resultant filament yarn were coated with 1.20% by weight of the polyallylamine compound as shown in Table 3, and then the coated filament yarn was wound up.

The coated filament yarn was converted to a plain weave having a basis weight of 300 g/m$^2$, and then cured at a temperature of 160 °C for 30 seconds.

The resultant fabric was laminated and then tested in the same manner as in Example 1.

The test results are shown in Table 3.

Table 3

| Item / Example No. | | Amount of oiling agent (% by wt) | Polyallylamine compound | | | Bonding strength index |
|---|---|---|---|---|---|---|
| | | | Type | MW | Amount (% by wt) | |
| Example | 5 | 0.21 | PAA-10 | 41,000 | 1.20 | 22 |
| | 6 | 0.20 | PAA-3 | 5,670 | 1.25 | 23 |
| Comparative Example 4 | | 0.22 | None | – | – | 7 |

Table 3 shows that, even when the polyallylamine compound is applied to the oiled filament yarn before weaving, the resultant coated fiber substrate provides a very strong bonding to the polyvinyl chloride resin material.

Examples 7 and 8 and Comparative Example 5

In each of Example 7 and 8 and Comparative Example 5, the same procedures as in Example 1 were carried out, with the following exceptions.

The coated fiber substrate was as indicated in Table 4.

The coated fiber substrate was further coated with 100 g/m$^2$ of a mixture of the resin indicated in Table 4 with a polyfunctional aliphatic isocyanate compound of the formula;

$$O = C = N-(CH_2)_6-N[-\overset{O}{\overset{\|}{C}}-NH(CH_2)_0-N=C=O]_2,$$

which was available under the trademark of Desmodule N, from Bayer, in the amount indicated in Table 4, and the further coated fiber substrate was heat-treated at a temperature of 140 °C for one minute.

The further coated fiber substrate was laminated with 310 g/m$_2$ of a film of the resin indicated in Table 4 and free from the aliphatic isocyanate compound, and the resultant laminate was cured at a temperature of 180 °C for 30 seconds.

The test results are shown in Table 4.

Table 4

| Item / Example No. | Type of coated fiber substrate (plain weave) | Bonding strength index | | | | | |
|---|---|---|---|---|---|---|---|
| | | Polyurethane(*)9 | | | Ethylene-vinyl acetate copolymer(*)10 | | |
| | | Content of poly-isocyanate (% by wt) | | | Content of poly-isocynate (% by wt) | | |
| | | 0 | 1.5 | 3.3 | 0 | 1.5 | 3.3 |
| Example 7 | Same as in Example 5 | - | 49 | - | - | 38 | 50 |
| Example 8 | Same as in Example 6 | - | 46 | - | - | 40 | 58 |
| Comparative Example 5 | Same as in Comparative Example 4 | - | 25 | 43 | - | 22 | 36 |

Note: (*)9 --- Polyurea type polyurethane resin prepared by copolymerizing polyoxytetramethylene glycol with 2,4-toluene disocyanate and diphenylmethane di-isocyanate.

(*)10 -- Ethene-vinyl acetate randum copolymer containing 20% by weight of copolymerized vinyl acetate.

Examples 9 to 13 and Comparative Examples 6 to 8

In each of Examples 9 to 13 and Comparative Examples 6 to 8, the following procedures were carried out.

A scoured, non-oiled plain fabric composed of polyethylene terephthalate multifilament yarns with a yarn count of 1,000 denier/192 filament, and having a basis weight of 250 g/m$^2$ was coated with an aqueous dispersion of the aliphatic polyepoxy compound as indicated in Table 5, dried, and then cured at a temperature of 200°C for 3 minutes.

Then the epoxy compound coated fabric was further coated with an aqueous solution of 7% by weight of the polyallylamine compound as indicated in Table 5, and dried at a temperature of 120°C for 3 minutes.

The amount of the coated polyallylamine compound is indicated in Table 5.

Table 5

| Item / Example No. | | Polyepoxy compound | | Polyallylamine compound | | | Resistance to yellowing | Bonding strength index |
|---|---|---|---|---|---|---|---|---|
| | | Type | Amount (wt%) | Type | Number average molecular weight | Amount (wt%) | | |
| Example | 9 | Glycerol polyglycidyl ether(*)11 | 0.30 | PAA-10(*)4 | 41,000 | 0.89 | Good | 35 |
| | 10 | Sorbitol polyglycidyl ehter(*)12 | 0.21 | PAA-10(*)4 | 41,000 | 0.77 | Good | 39 |
| | 11 | Diglycerol polyglycidyl ether(*)13 | 0.29 | PAA-10(*)4 | 41,000 | 0.81 | Good | 35 |
| | 12 | Polyglycerol polyglycidyl ether(*)14 | 0.25 | PAA-10(*)4 | 41,000 | 0.91 | Good | 37 |
| | 13 | Diglycerol polyglycidyl ether(*)13 | 0.29 | PAA-3(*)5 | 5,670 | 0.82 | Good | 35 |
| Comparative Example | 6 | Diglycirol polyglycidyl ether(*)13 | 0.30 | None | — | — | Good | 7 |
| | 7 | " | 0.25 | Epomine SP012(*)6 | 1,200 | 0.88 | Bad | 36 |
| | 8 | None | — | None | — | — | Good | 10 |

Note: (*) 11 ... Trademark: Denacol EX314, Nagase Kasei Kogyo K.K.
(*) 12 ... Trademark: Denacol EX614B, Nagase
(*) 13 ... Trademark: Denacol EX421, Nagase
(*) 14 ... Trademark: Denacol 512, Nagase

The peeling strength of the laminate of Comparative Example 8 was 0.9 to 1.0 kg/25.4 mm.

Example 14 and Comparative Example 9

In each of Example 14 and Comparative Example 9, poly-p-phenylene terephthalamide mutifilament yarns with a yarn count of 1,500 denier/1,000 filaments were treated with an oiling liquid containing 8% by weight of a polyglycerol polyglycidyl ether (Denacol Ex 512). The individual filaments in the yarn were coated with 0.2% by weight of the polyepoxy compound.

The treated yarn was heat treated at a temperature of 210 °C for 1.2 seconds, treated with an aqueous solution of the polyallylamine compound as indicated in Table 6, and were then wound up. The resultant coated yarns contained 0.85% by weight of the polyallylamine compound.

The resultant coated yarns were converted to a plain weave fabric having a basis weight of 300 g/$m^2$, and the resultant fabric was tested in the same manner as in Example 1.

The test results are shown in Table 6.

Table 6

| Item / Example No. | Polyepoxy compound | | Polyallylamine compound | | | Bonding strength index |
|---|---|---|---|---|---|---|
| | Type | Amount (wt%) | Type | MW | Amount (wt%) | |
| Example 14 | Deconal EX512 | 0.31 | PAA-10 | 41,000 | 0.93 | 28 |
| Comparative Example 9 | " | 0.31 | None | - | - | 8 |

Example 15 and Comparative Example 10

In each of Example 15 and Comparative Example 10, the following procedures were carried out.

In a melt-spinning procedure for a polyethylene terephthalate multifilament yarn with a yarn count of 1,000 denier/192 filaments, individual undrawn filaments in the yarn were coated with a spinning oiling agent containing 7% by weight of Denacol Ex 512 and drawn and heat-treated at a temperature of 200° C. The resultant drawn filament yarn had 0.37% by weight of the oiling agent.

The Deconal Ex 512-coated filaments in the yarn were further coated with 0.80% by weight of PAA-10C (trademark of a polyallylamine compound having a MW of 41,000) in the amount as shown in Table 7, before a winding operation was applied thereto.

The resultant coated yarns were converted to a plain weave fabric having a basis weight of 300 $g/m^2$, and the fabric was cured at 200° C for one minute.

The resultant fabric was laminated, and the resultant laminate was tested in the same manner as in Example 1.

The test results are shown in Table 7.

Table 7

| Item / Example No. | Polyepoxy compound | | Polyallylamine compound | | | Resistance to yellowing | Bonding strength Index |
|---|---|---|---|---|---|---|---|
| | Type | Amount (wt%) | Type | MW | Amount (wt%) | | |
| Example 15 | Denacol EX512 | 0.37 | PAA-10 | 41,000 | 0.80 | Good | 36 |
| Comparative Example 10 | " | 0.87 | None | - | - | Good | 8 |

Example 16 and Comparative Examples 11 and 12

In each of Example 16 and Comparative Examples 11 and 12 the coated fabric as indicated in Table 8 was laminated with a layer of the same polyurethane resin or ethylene-vinyl acetate copolymer resin as in Example 7.

The test results are shown in Table 8.

Table 8

| Item / Example No. | | Type of coated fabric | Bonding strength index | |
|---|---|---|---|---|
| | | | Polyurethane resin | Ethylene-vinyl acetate copolymer resin |
| Example 16 | | Same as in Example 15 | 38 | 33 |
| Comparative Example | 11 | Same as in Comparative Example 9 | 12 | 7 |
| | 12 | Same as in Comparative Example 10 | 15 | 11 |

Examples 17 to 21 and Comparative Examples 13 to 15

In each of Examples 17 to 21 and Comparative Examples 13 to 15, the same procedures as in Example 9 were carried out, with the following exceptions.

After applying the polyepoxy compound, the resultant coated fabric was cured at a temperature of 210 °C for 3 minutes.

The aqueous solution of the polyallylamine compound contained 5% by weight of the monoallylamine-diallylamine compound copolymer as indicated in Table 9.

After the copolyallylamine compound solution was applied, the resultant coated fabric was dried at 150 °C for 3 minutes.

The dried fabric contained the copolyallylamine compound in the amount as shown in Table 9.

The resultant coated fabric was laminated and tested in the same manner as in Example 1.

The test results are shown in Table 9.

Table 9

| Item / Example No. | | Polyepoxy compound | | Monoallylamine-diallylamine compound copolymer | | | | Resistance to yellowing | Bonding strength index |
|---|---|---|---|---|---|---|---|---|---|
| | | Type | Amount (wt%) | Component | Molar ratio | MW | Amount (wt%) | | |
| Example | 17 | Denacol EX-314 | 0.22 | MAA*16/DAA*17 | 0.5/0.5 | 7,200 | 0.95 | Good | 34 |
| | 18 | Denacol EX-6143 | 0.24 | MAA/DAA | 0.8/0.2 | 8,500 | 1.08 | Good | 42 |
| | 19 | Denacol EX-421 | 0.19 | MAA/PDA*18 | 0.7/0.3 | 12,000 | 0.77 | Good | 35 |
| | 20 | Denacol EX-512 | 0.25 | MAA/MDA*19 | 0.7/0.3 | 9,800 | 0.81 | Good | 39 |
| | 21 | Denacol EX-421 | 0.19 | MAA/BDA*20 | 0.7/0.3 | 5,500 | 1.22 | Good | 34 |
| Comparative Example | 13 | Denacol EX-421 | 0.19 | None | - | - | - | - | 6 |
| | 14 | " | 0.19 | Epomine SP012 | - | 1,200 | 0.97 | Bad | 33 |
| | 15 | None | - | None | - | - | - | Good | 10 |

Note: (*)16 ... MAA: Monoallylamine
(*)17 ... DAA: Diallylamine
(*)18 ... PDA: Propyldiallylamine
(*)19 ... MDA: Methyldiallylamine
(*)20 ... BDA: Butyldiallylamine

The peeling strength of the laminate of Comparative Example 15 was from 0.9 to 1.0 kg/25.4mm.

Example 22 and Comparative Example 16

In each of Examples 22 and Comparative Example 16, the same procedures as in Example 14 were carried out, with the following exceptions.

The amount of the polyepoxy compound (Denacol EX512) on the poly-p-phenylene terephthalamide filaments was 0.23% by weight.

The polyallylamine compounds was a copolymer of monoallylamine (MAA) with diallylamine (DAA) in a weight ratio of 0.5/0.5 and having a MW of 7200.

This copolyallylamine compound was imparted in the amount as shown in Table 10 the poly-p-phenylene terephthalamide filaments.

The test results are shown in Table 10.

Table 10

| Item / Example No. | Polyepoxy compound | | Monoallylamine-diallylamine compound copolymer | | | |
|---|---|---|---|---|---|---|
| | Type | Amount (wt%) | Type | | MW | Amount (wt%) |
| | | | Component | Weight ratio | | |
| Example 22 | Denacol EX512 | 0.23 | MAA/DAA | 0.5/0.5 | 7,200 | 0.81 |
| Comparative Example 16 | " | 0.23 | None | — | — | — |

Example 23 and Comparative Example 17

In each of Example 23 and Comparative Example 17, the same procedures as in Example 15 were carried out, with the following exceptions.

The amount of the oiling agent containing Denacol EX512 and imparted to the undrawn polyester filaments was as shown in Table 11.

The polyallylamine compound was the same as the monoallylamine-diallylamine copolymer of Example 22, and was imparted in the amount as shown in Table 11 to the oiling agent-coated filaments.

The test results are shown in Table 11.

Table 11

| Item / Example No. | Polyepoxy compound | | Monoallylamine-diallylamine copolymer | | | | Bonding strength |
|---|---|---|---|---|---|---|---|
| | Type | Amount (wt%) | Type: Component | Type: Weight ratio | MW | Amount (wt%) | |
| Example 23 | Denacol EX512 | 0.21 | MAA/DAA | 0.5/0.5 | 7,200 | 0.80 | 35 |
| Comparative Example 17 | " | 0.20 | None | — | — | — | 6 |

Examples 24 to 28 and Comparative Examples 18 to 20

In each of Examples 24 to 28 and Comparative Examples 18 to 20, the same procedures as in Example 9 were carried out with the following exceptions.

In a preparation of polyethylene terephthalate multifilament yarn having a yarn count of 7,200 denier/1000 filaments, undrawn filaments were treated with an oiling agent, which was prepared in the following manner.

A first mixture was prepared from 85% by weight of the aliphatic polyepoxy compound as indicated in Table 12 and 15% by weight of a sodium alkylsulfonate, and a second mixture was prepared from 60% by weight of tridecyl stearate, 35% by weight of (ethyleneoxide)n-lauryl ether and 5% by weight of a sodium alkylsulfate.

The first mixture was mixed in an amount of 60 parts by weight with 40 parts by weight of the second mixture, to provide the oiling agent, the oiling agent was then emulsified in an amount of 10% by weight in water, and was fixed in an amount of 0.18% by dry weight on the undrawn filaments.

The oiling agent-coated filament yarn was drawn and heat-treated, and then treated with a treating liquid containing 10% by weight of a mixture of 100 parts by weight of the polyallylamine compound as indicated in Table 12 with 5 parts by weight of an (ethyleneoxide)n-alkylether. The amount of the polyallylamine-containing mixture on the filaments was as shown in Table 12.

The coated filament yarn was dried and heat-treated at a temperature of 140 °C and then wound up.

The coated filament yarns were converted to a plain weave fabric having a basis weight of 300g/m$^2$, and the resultant fabric was laminated with a polyvinyl chloride resin layer in the same manner as in Example 1. The resultant laminate was tested in the same manner as in Example 1.

The test results are shown in Table 12.

The laminate of Comparative Example 20 had a peeling strength of 0.9 to 1.0 kg/25.4 mm.

Table 12

| Item / Example No. | | Polyepoxy compound | | Polyallylamine compound | | | Resistance to yellowing | Bonding strength index |
|---|---|---|---|---|---|---|---|---|
| | | Type | Amount (wt%) | Type | Number average molecular weight | Amount (wt%) | | |
| Example | 24 | Glycerol polyglycidyl ether(*)11 | 0.20 | PAA-10 | 41,000 | 1.25 | Good | 32 |
| | 25 | Sorbitol polyglycidyl ehter(*)12 | 0.21 | PAA-10 | 41,000 | 1.20 | Good | 33 |
| | 26 | Diglycerol polyglycidyl ether(*)13 | 0.20 | PAA-10 | 41,000 | 1.30 | Good | 30 |
| | 27 | Polyglycerol polyglycidyl ether(*)14 | 0.22 | PAA-10 | 41,000 | 1.20 | Good | 31 |
| | 28 | Diglycerol polyglycidyl ether(*)13 | 0.19 | PAA-3 | 5,670 | 1.35 | Good | 33 |
| Comparative Example | 18 | Diglycirol polyglycidyl ether(*)13 | 0.20 | None | - | - | Good | 7 |
| | 19 | " | 0.25 | Epomine SP012 | 1,200 | 1.35 | Bad | 27 |
| | 20 | None | - | None | - | - | Good | 10 |

Note: (*) 11 ... Trademark: Denacol EX314, Nagase Kasei Kogyo K.K.
(*) 12 ... Trademark: Denacol EX614B, Nagase
(*) 13 ... Trademark: Denacol EX421, Nagase
(*) 14 ... Trademark: Denacol EX512, Nagase

Examples 29 to 32 and Comparative Examples 21 and 22

In each of Examples 29 to 32 and Comparative Examples 21 and 22, the same procedures as in Example 24 were carried out, with the following exceptions.

The polyethylene terephthalate multifilament yarn was replaced by poly-p-phenylene terephthalamide multifilament yarn with a yarn count of 7,200 denier/1000 filaments.

The undrawn multifilament yarn was treated with an oiling agent in the amount as shown in Table 13 and comprising the polyepoxy compound as shown in Table 13, drawn, and heat-treated.

The drawn filament yarn was converted to a plain weave fabric having a basis weight of 250 $g/m^2$.

The fabric was treated with a treating liquid containing the polyallylamine compound as shown in Table 13 so that the filaments in the fabric were coated with the polyallylamine compound in the amount as shown in Table 13, predried at a temperature of 120°C for 3 minutes, and finally dried at a temperature of 150°C for 3 minutes.

The test results are shown in Table 13.

Table 13

| Item / Example No. | | Polyepoxy compound Type | Polyepoxy compound Amount (wt%) | Polyallylamine compound Type | Polyallylamine compound MW | Polyallylamine compound Amount (wt%) | Bonding strength index |
|---|---|---|---|---|---|---|---|
| Example | 29 | Denacol EX421 | 0.35 | PAA-10 | 41,000 | | 39 |
| | 30 | Denacol EX512 | 0.37 | PAA- 3 | 5,670 | | 38 |
| | 31 | Denacol EX614B | 0.34 | PAA- 3 | 5,670 | | 39 |
| | 32 | Denacol EX412 | 0.35 | PAA- 3 | 5,670 | | 37 |
| Comparative Example | 21 | Denacol EX421 | 0.35 | - | - | - | 5 |
| | 22 | None | - | - | - | - | 10 |

## Claims

1. A highly adhesive synthetic fiber material able to be firmly bonded to resinous materials, comprising:
   (A) a substrate comprising at least one synthetic fiber, and
   (B) a coating layer formed on the synthetic fiber in the substrate and comprising (a) 10% to 100%

by weight of at least one polyallylamine compound having recurring units of the formula (I):

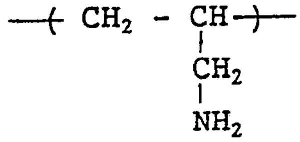

(I)

and (b) 0% to 90% by weight of at least one epoxy compound.

2. The synthetic fiber material as claimed in claim 1, wherein the synthetic fiber in the substrate is a polyester fiber.

3. The synthetic fiber material as claimed in claim 1, wherein the synthetic fiber in the substrate is a polyamide fiber.

4. The synthetic fiber material as claimed in claim 1, wherein the polyallylamine compound is a copolymer having recurring units selected from those of the formulae (II) and (III):

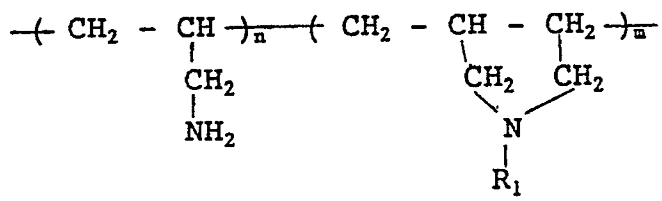

(II)

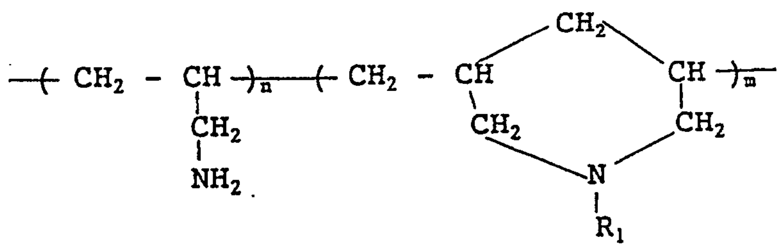

in which formulae (II) and (III), $R_1$ represents a member selected from the group consisting of a hydrogen atom, alkyl radicals with 1 to 18 carbon atoms, a benzyl radical, and radicals of the formulae $-CH_2-CH_2-OH$ and -

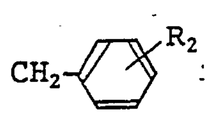

:

in which $R_2$ represents an alkyl radical with 1 to 18 carbon atoms, n and m represent, respectively and independently from each other, an integer of 1 or more, and a ratio n/m is in a range of from 95/5 to 5/95.

5. The synthetic fiber material as claimed in claim 1 or 4, wherein the coating layer comprises (a) 10 to 95% by weight of the at least one polyallylamine compound and (b) 5 to 90% by weight of at least one aliphatic polyepoxy compound having at least two epoxy radicals per molecule thereof.

6. The synthetic fiber material as claimed in claim 1, wherein the polyallylamine compound has a number average molecular weight of from 2,000 to 100,000.

7. The synthetic fiber material as claimed in claim 1, wherein the coating layer on the substrate is in an amount of 0.1 to 5.00% based on the weight of the substrate.

**8.** The synthetic fiber material as claimed in claim 1 or 5, wherein the coating layer comprises an undercoat layer composed of the epoxy compound and an uppercoat layer composed of the polyallylamine compound.

**9.** The synthetic fiber materials as claimed in claim 5, wherein the coating layer is one formed on a substrate consisting of at least one synthetic filament, by coating a precursory substrate consisting of at least one undrawn synthetic filament with the aliphatic polyepoxy compound; drawing and heat-setting the coated undrawn filament substrate; further coating the drawn filament substrate with the polyallylamine compound; and heat-treating the further coating filament substrate.

European Patent Office

# EUROPEAN SEARCH REPORT

Application Number

EP 90122237.2

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| Y | EP - A1 - 0 142 337 (NITTO BOSEKI CO., LTD.) * Claims; page 9; example 1 * -- | 1,4 | B 32 B 27/04<br>C 08 J 5/06 |
| Y | DATABASE WPIL, no. 87-253 357 DERWENT PUBLICATIONS LTD., London, GB * Abstract * & JP-A-62 174 184 (HONSHU PAPER MFG. K.K.) 30-07-1987 -- | 1 | |
| A | DATABASE WPIL, no. 87-168 089 DERWENT PUBLICATIONS LTD., London, GB * Abstract * & JP-A-62 101 603 (HOKUSHIN KOGYO K.K., EARTH CLEAN K.K.) 12-05-1987 -- | 1 | |
| A<br>D | DATABASE WPI, no. 74-54 363 DERWENT PUBLICATIONS LTD., London, GB * Abstract * & JP-A-49 004 775 (ASAHI CHEM. IND. CO. LTD.) 16-01-1974 ---- | 1-3 | TECHNICAL FIELDS SEARCHED (Int. Cl.5)<br>B 32 B<br>C 08 J<br>D 06 P |

The present search report has been drawn up for all claims

| Place of search | Date of completion of the search | Examiner |
|---|---|---|
| VIENNA | 13-02-1991 | WEIGERSTORFER |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document